# EUROPEAN PATENT APPLICATION

(11) **EP 3 038 374 A1**
(43) Date of publication of application: **29.06.2016**
(21) Application number: 15198004.2
(22) Date of filing: 04.12.2015
(51) Int. Cl.: H04N 21/443, H04N 21/482, H04N 5/45

(54) **DISPLAY DEVICE AND DISPLAY METHOD**

(30) Priority: 24.12.2014 KR 20140188639
(71) Applicant: Samsung Electronics Co., Ltd., Gyeonggi-do 16677 (KR)
(72) Inventor: YOO, Jung-eun, Gyeongsangbuk-do (KR)
(74) Representative: Taor, Simon Edward William

(57) **Abstract**

A display device and a display method are provided. The display device may include a display unit providing a multi-window screen image including a plurality of windows; and a control unit, which, if a user input for selecting at least one application is received, obtains property information regarding the selected application and, if the obtained property information regarding the selected application corresponds to broadcasting content, displays a screen image regarding execution of the selected application in a particular window from among the plurality of windows, which is set to display the broadcast in advance.

## Description

The disclosure relates to a display device and a display method, and for example, to a display device and a display method for providing a multi-window screen image.

A display device is a device having a function for displaying images that may be viewed by a user. A user may watch a broadcast program via a display device. A display device displays a broadcast program selected by a user on a display screen from among broadcast signals transmitted by a broadcasting station.

Currently, changing from analog broadcasting to digital broadcasting is a global trend. Digital broadcasting refers to broadcasting whereby digital images and digital audio signals are transmitted. Compared to analog broadcasting, digital broadcasting features smaller data loss based on higher resistance to external noise, easier error correction, higher resolutions, and clearer images. Furthermore, unlike analog broadcasting, digital broadcasting may provide bidirectional services.

Furthermore, smart TVs that provide a digital broadcasting function and various additional content have recently become available. A smart TV is intended to analyze demands of a user and provide services corresponding to the user demands without the user having to perform an operation, rather than operating based on manual selections by the user.

Furthermore, smart TVs that provide multi-window screen images by dividing a display screen into a plurality of windows have recently become available.

A display device and a display method for providing a multi-window screen image are provided.

Additional aspects will be set forth in part in the description which follows and, in part, will be apparent from the description.

According to an aspect of an example, a display device includes a display unit including a display providing a multi-window screen image including a plurality of windows; and a control unit including a processor or controller, which, if an input for selecting at least one application is received, is configured to obtain property information regarding the selected application and, if the obtained property information regarding the selected application corresponds to broadcasting contents, to display a screen image regarding execution of the selected application at a particular window from among the plurality of windows, which is set to display the broadcasting content in advance.

The display device may further include a tuner or tuner unit configured to receive broadcast signals, wherein, if the obtained property information regarding the selected application corresponds to the broadcasting contents, the controller is configured to receive broadcast signals via the tuner unit and to output the broadcasting signals in a particular window from among the plurality of windows, which is set to display broadcasting contents in advance.

If the obtained property information regarding the selected application corresponds to property information other than the property information corresponding to the broadcasting contents, the controller is configured to display a screen image regarding execution of the selected application at one of windows other than the particular window from among the plurality of windows, which is set to display the broadcasting contents in advance.

The controller is configured to set a location of a window for displaying a screen image regarding execution of the selected application from among the plurality of windows in correspondence to property information regarding the selected application in advance.

The controller is configured to display a list including the at least one application and receives a user input for selecting at least one application from the list.

The controller is configured to categorize the at least one application included in the list according to property information regarding the application and displays a result of the categorization.

The controller is configured to set a displaying location of a screen image regarding execution of at least one application displayed in at least one of the plurality of windows based on a user input, to be fixed.

According to an aspect of another example, a display method includes providing a multi-window screen image including a plurality of windows; receiving an input for selecting at least one application; obtaining property information regarding the selected application; and, if the obtained property information regarding the selected application corresponds to broadcasting contents, displaying a screen image regarding execution of the selected application at a particular window from among the plurality of windows, which is set to display the broadcasting content in advance.

In displaying the screen image regarding execution of the selected application, if the obtained property information regarding the selected application corresponds to broadcasting contents, broadcast signals are received via the tuner unit and are output at a particular window from among the plurality of windows, which is set to display the broadcasting contents in advance.

In displaying the screen image regarding execution of the selected application, if the obtained property information regarding the selected application corresponds to property information other than the property information corresponding to the broadcasting contents, a screen image regarding execution of the selected application is displayed at one of the windows other than the particular window from among the plurality of windows, which is set to display broadcasting contents in advance.

The display method further includes setting a location of a window for displaying a screen image regarding execution of the selected application from among the plurality of windows in correspondence to property information regarding the selected application in advance.

Receiving the input includes displaying a list including the at least one application; and receiving an input for selecting at least one application from the list.

In displaying the list, the at least one application included in the list is categorized based on property information regarding the application and a result of the categorization is displayed.

The display method further includes setting a displaying location of a screen image regarding execution of at least one application displayed in at least one of the plurality of windows based on a user input, to be fixed.

These and/or other aspects will become apparent and more readily appreciated from the following detailed description, taken in conjunction with the accompanying drawings in which like reference numerals refer to like element, and wherein:
FIG. 1 is a schematic diagram illustrating an example operation between a display device and a control device;
FIGS. 2 and 3 are block diagrams illustrating an example display device;
FIG. 4 is a flowchart illustrating an example method of operating a display device;
FIGS. 5A and 5B are diagrams illustrating an example of displaying broadcasting content;
FIG. 6 is a flowchart illustrating an example method of operating a display device;
FIGS. 7A, 7B, 8A and 8B are diagrams illustrating an example of displaying content other than broadcasting content;
FIG. 9 is a diagram illustrating an example of fixing a location of a window for displaying content;
FIG. 10 is a diagram illustrating an example of displaying a list of applications; and
FIG. 11 is a diagram illustrating an example of multi-window screen images.

Hereinafter, examples will be described more fully with reference to the accompanying drawings. These examples may, however, be embodied in many different forms and should not be construed as limited to the examples set forth herein. Rather, the examples are provided so that this disclosure will be thorough and complete, and will convey the scope of the disclosure to those of ordinary skill in the art. In the drawings, certain elements are omitted for clarity, and like reference numerals denote like elements throughout the disclosure. As used herein, the term "and/or" includes any and all combinations of one or more of the associated listed items. Expressions such as "at least one of," when preceding a list of elements, modify the entire list of elements and do not necessarily modify the individual elements of the list.

The purpose, features and advantages of the disclosure will be apparent from the detailed descriptions given below with reference to the attached drawings. However, as the disclosure allows for various changes and numerous examples, particular exampels will be illustrated in the drawings and described in detail in the disclosure. However, this is not intended to limit the disclosure to particular modes of practice, and it is to be appreciated that all changes, equivalents, and substitutes that do not depart from the technical scope of the disclosure are encompassed in the disclosure. In describing the drawings, like reference numerals are used for like elements. In the following description, detailed description of known functions and configurations incorporated herein is omitted when it may make the subject matter of the disclosure unclear. Furthermore, numbers used for description of the examples (for example, the first and the second, etc.) are merely identification symbols for distinguishing one element from another.

Hereinafter, examples will be described in detail with reference to the accompanying drawings. The suffixes 'module' and 'unit' may be used for elements in order to facilitate the disclosure. Significant meanings or roles need not be given to the suffixes themselves and it is understood that the terms 'module' and 'unit' may be used together or interchangeably.

The term "devices" described below may include not only fixed terminals, such as a digital TV and a desktop computer, but also portable terminals, such as a mobile phone, a smart phone, a tablet personal computer (PC), a laptop computer, a digital broadcasting terminal, a personal digital assistant (PDA), a portable multimedia player (PMP), and a navigation device.

Throughout the disclosure, it will be understood that when a portion is referred to as being "connected to" another portion, it can be "directly connected to" the other portion or "electrically connected to" the other portion via another element. Furthermore, it will be further understood that the terms "comprises" and/or "comprising" used herein specify the presence of stated features or components, but do not preclude the presence or addition of one or more other features or components.

Hereinafter, examples will be described in detail with reference to accompanying drawings.

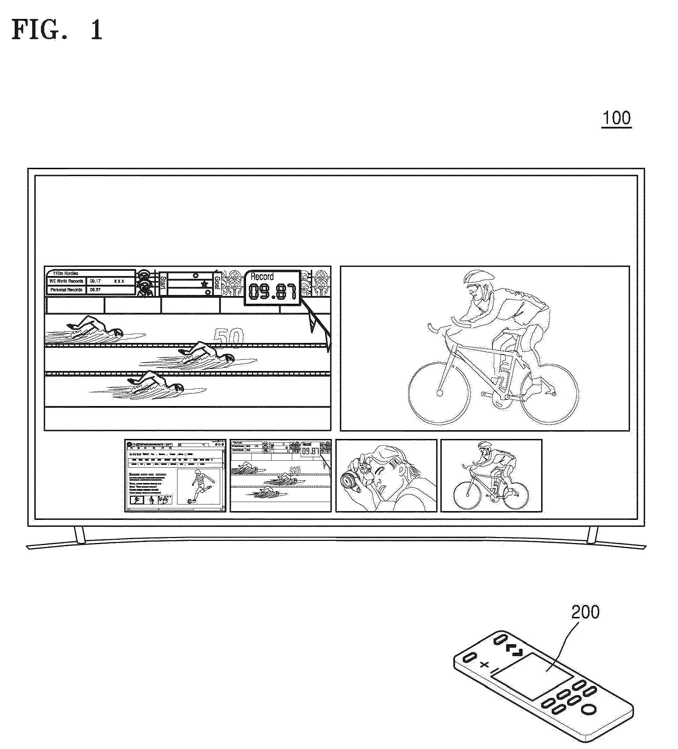

FIG. 1 is a schematic diagram illustrating an example operation between a display device and a control device.

Referring to FIG. 1, a display device 100 capable of communicating, by wire or wirelessly, with a control device 200 is shown.

The control device 200 may control the display device 100 using close-distance communication including, for example, infrared (IR) communication or Bluetooth communication. A user may control functions of the display device 100 via the control device 200 by using at least one of provided keys (including buttons), a touch pad, a microphone (not shown) capable of receiving a voice of a user, and a sensor (not shown) capable of recognizing motions of the control device 200.

The control device 200 includes a power ON/OFF button for turning the display device 100 on or off. The control device 200 may also change a channel of the display device 100, adjust the volume of the display device 100, select ground wave broadcasting, cable broadcasting, or satellite broadcasting, or change settings of the display device 100.

The display device 100 may be embodied not only as a flat-panel display device, but also as a curved display device including a display screen having a curvature or a flexible display device in which a curvature of a display screen may be adjusted. Output resolutions of the display device 100 may, for example, include a high definition (HD) resolution, a full HD resolution, an ultra HD resolution, or a resolution clearer than the ultra HD resolution. A diagonal length of the display screen of the display device 100 may, for example, include a length smaller than or equal to 650 mm, 660 mm, 1,010 mm, 1,520 mm, 1,890 mm, or a length equal to or greater than 2,000 mm. Horizontal/vertical lengths of the display screen of the display device 100 may, for example, include 643.4 mm x 396.5 mm, 934.0 mm x 548.6 mm, 1,670.2 mm x 962.7 mm, or 2,004.3 mm x 1,635.9 mm, for example. Furthermore, horizontal/vertical aspect ratios of the display device 100 may include 4:3, 16:9, 16:10, 21:9, or 21:10, for example.

Throughout the disclosure, the term "user" refers to a person who controls functions or operations of the display device 100 by using the control device 200 and may include a viewer, a device manager, and an installation technician.

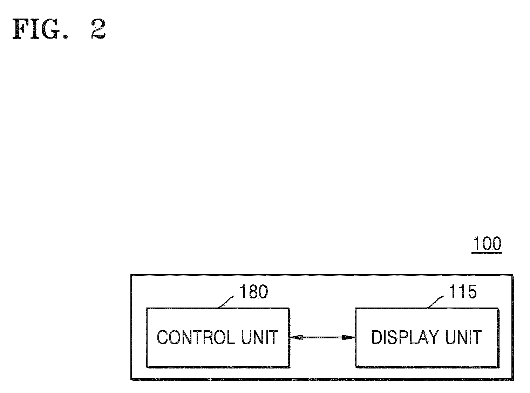

The display device 100 may provide a multi-window screen image including a plurality of windows to a display unit 115 (not indicated in FIG. 1 - shown in FIG. 2). A user may control at least one of the plurality of windows constituting the multi-window screen image using the control device 200.

According to an example, the display device 100 may display screen images regarding executions of designated applications at a plurality of windows, respectively.

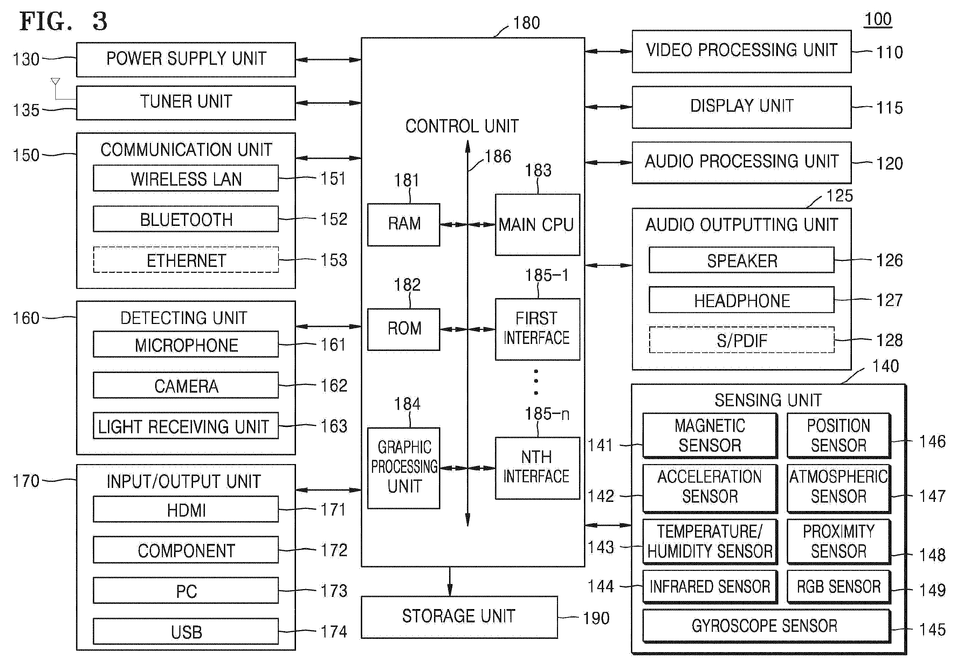

According to an example, the display device 100 may receive a broadcast signal via a tuner unit 135 that includes tuner circuitry (refer to FIG. 3) and display corresponding broadcasting content in a particular window from among the plurality of windows, where the particular window is set in advance to display broadcasting content.

According to an example, the display device 100 may display a list including at least one application at the display unit 115.

FIGS. 2 and 3 are block diagrams illustrating an example display device 100.

Referring to FIG. 2, the display device 100 may include the display unit 115 including, for example, a display, and a control unit 180 in, for example, the form of a processor or controller. However, not all of the shown components are necessary components. The display device 100 may be embodied with more or less components than those shown in FIG. 2.

For example, as illustrated in FIG. 3, the example display device 100 may further include a video processing unit 110, an audio processing unit 120, an audio outputting unit 125, a power supply unit 130, the tuner unit 135, a sensing unit 140, a detecting unit 160, an input/output unit 170, and a storage unit 190.

Hereinafter, detailed descriptions of the above-stated components will be provided.

The video processing unit 110 processes video data received by the display device 100. The video processing unit 110 may perform various image processing operations with respect to video data, such as decoding, scaling, noise filtering, frame rate conversion, and resolution conversion.

The display unit 115 may include, for example, a display and may, for example, display videos included in broadcast signals received via the tuner unit 135 under the control of the control unit 180. Furthermore, the display unit 115 may display content (e.g., moving pictures) input via the communication unit 150 or the input/output unit 170. The input/output unit 170 may output images stored in the storage unit 190 under the control of the control unit 180. Furthermore, the display unit 115 may display a voice user interface (UI) (e.g., a voice UI including a voice command guide) for performing a voice recognition task corresponding to voice recognition or a motion UI (e.g., a motion UI including a user motion guide for motion recognition) for performing a motion recognition task corresponding to motion recognition.

The display unit 115 according to an example may provide a multi-window screen image including a plurality of windows.

Furthermore, the display unit 115 may display a list including at least one application.

The audio processing unit 120 processes audio data. The audio processing unit 120 may perform various audio processing operations with respect to audio data, such as decoding, amplification, and noise filtering.

Meanwhile, the audio processing unit 120 may include a plurality of audio processing modules for processing audio corresponding to a plurality of content.

The audio outputting unit 125 outputs audio included in broadcast signals received via the tuner unit 135 under the control of the control unit 180. The audio outputting unit 125 may output audio (e.g., sounds, voices, etc.) input via the communication unit 150 or the input/output unit 170. Furthermore, the audio outputting unit 125 may output audio stored in the storage unit 190 under the control of the control unit 180. The audio outputting unit 125 may include at least one of a speaker 126, a headphone output terminal 127, and a Sony/Philips digital interface (S/PDIF) output terminal 128. The audio outputting unit 125 may include a combination of the speaker 126, the headphone output terminal 127, and the S/PDIF output terminal 128.

The power supply unit 130 supplies power received from an external power source to internal components 110 through 190 of the display device 100 under the control of the control unit 180. Furthermore, the power supply unit 130 may supply power output by one, two, or more batteries (not shown) arranged inside the display device 100 to the internal components 110 through 190 under the control of the control unit 180.

The tuner unit 135 may include tuner circuitry configured to tune and select a frequency of a channel to be received by the display device 100 from among a number of frequencies by amplifying, mixing, and resonating broadcast signals received by wire or wirelessly. The broadcast signals may include audio signals, video signals, and additional information (e.g., an electronic program guide (EPG)).

The tuner unit 135 may include tuner circuitry configured to receive broadcast signals in a frequency band corresponding to a channel number (e.g., a cable broadcasting channel 506) based on a received input (e.g., a control signal received from a control device, such as a channel number input, a channel up or channel down input, and a channel input in an EPG screen image).

The tuner unit 135 may include tuner circuitry configured to receive broadcast signals from various sources, such as ground wave broadcasting, cable broadcasting, satellite broadcasting, and internet broadcasting. The tuner unit 135 may also include circuitry configured to receive broadcast signals from sources including analog broadcasting and digital broadcasting. A broadcast signal received via the tuner unit 135 is decoded (e.g., audio decoding, video decoding, or additional information decoding) and is separated into audio, video, and/or additional information. The separated video, audio, and/or additional information may be stored in the storage unit 190 under the control of the control unit 180.

Furthermore, the display device 100 may include one tuner unit 135 or a plurality of tuner units 135. The tuner unit 135 may be integrated with the display device 100, may be embodied as a separate device (e.g., a set-top box (not shown)) having a tuner unit electrically connected to the display device 100, or may be embodied as a tuner unit (not shown) that may be connected to the input/output unit 170.

The tuner unit 135 according to an example may receive broadcast signals and output the broadcast signals to the display unit 115 under the control of the control unit 180.

The sensing unit 140 may include at least one sensor configured to detect a state of the display device 100 or states of the surroundings of the display device 100 and transmit information obtained as a result of the detection to the power supply unit 130. The sensing unit 140 may, for example, include at least one of a geomagnetic sensor 141, an acceleration sensor 142, a temperature/humidity sensor 143, an infrared ray sensor 144, a gyroscope sensor 145, a location sensor (e.g., a GPS sensor) 146, an atmospheric pressure sensor 147, a proximity sensor 148, and an illuminance sensor 149, but embodiments of the invention are not limited thereto. Since functions of the above-stated sensors are apparent to one of ordinary skill in the art based on names of the above-stated sensors, detailed descriptions thereof will be omitted.

Furthermore, the sensing unit 140 may include a sensor for detecting a touch input from an input device and a sensor for detecting a touch input from a user. In this case, the sensor for detecting a touch input may be included in a touch screen or a touch pad. Furthermore, the sensor for detecting a touch input from an input device may be located below a touch screen or a touch pad or may be included in a touch screen or a touch pad.

The communication unit 150 may include circuitry configured to connect the display device 100 to an external device (e.g., an audio device) under the control of the control unit 180. The control unit 180 may include a processor configured to transmit/receive content to/from, download applications from, or browse web sites via an external device connected via the communication unit 150.

The communication unit 150 may, for example, include at least one of a wireless LAN communication unit 151, a Bluetooth communication unit 152, and a wired Ethernet communication unit 153 in correspondence to performance and structure of the display device 100. The communication unit 150 may also include a combination of the wireless LAN communication unit 151, the Bluetooth communication unit 152, and the Ethernet communication unit 153.

Furthermore, the communication unit 150 may include a Bluetooth Low Energy communication unit, a near field communication (NFC) unit, a Wi-Fi (WLAN) communication unit, a Zigbee communication unit, an infrared data association (IrDA) communication unit, a Wi-Fi Direct (WFD) communication unit, an ultra wideband (UWB) communication unit, an Ant+ communication unit, etc. However, the disclosure is not limited thereto.

Furthermore, the communication unit 150 may transmit and receive wireless signals to and from at least one of a station, an external device, and a server on a mobile communication network. Here, the wireless signals may include voice call signals, video call signals, or various types of data related to transmission and reception of text/multimedia messages.

Furthermore, the communication unit 150 may include a broadcast receiving unit that receives broadcast signals and/or broadcast-related information from outside via broadcasting channels. The broadcasting channels may include satellite channels and ground wave channels.

Furthermore, the communication unit 150 may receive control signals from an external control device under the control of the control unit 180. The control signals may be embodied as Bluetooth type signals, RF type signals, or Wi-Fi type signals.

The communication unit 150 according to an example may communicate with an external audio device under the control of the control unit 180. Particularly, the communication unit 150 may include a BLE communication unit and a WLAN communication unit and may transmit and receive designated control signals to and from an external audio device within a designated distance.

The detecting unit 160 may include circuitry configured to detect a voice, an image, or an interaction.

For example, the microphone 161 receives a voice spoken by a user. The microphone 161 may transform a received voice into an electric signal and output the electric signal to the control unit 180. A voice of a user may include a voice command corresponding to a menu or a function of the display device 100. A recommended recognition range of the microphone 161 is within 4m from the microphone 161 to a location of a user, where the recognition range of the microphone 161 may vary based on a volume of a voice of a user and the surrounding environment (e.g., a volume of a sound from a speaker, volumes of ambient noises, etc.)

The microphone 161 may be integrated with the display device 100 or may be embodied separately from the display device 100. The separated microphone 161 may be electrically connected to the display device 100 via the communication unit 150 or the input/output unit 170.

It will be apparent to one of ordinary skill in the art that the microphone 161 may be omitted based on performance and structures of the display device 100.

The camera 162 may include a lens (not shown) and an image sensor (not shown). The camera 162 may provide an optical zoom or a digital zoom using a plurality of lenses and image processing techniques. A recognition range of the camera 162 may be set to any of various values based on an angle of the camera 162 and surrounding environmental conditions. If the camera 162 includes a plurality of cameras, a 3-dimensional (3D) still image or a 3D motion may be received via the plurality of cameras.

The camera 162 may be integrated with the display device 100 or may be embodied separately from the display device 100. The separated camera 162 may be electrically connected to the display device 100 via the communication unit 150 or the input/output unit 170.

It will be apparent to one of ordinary skill in the art that the camera 162 may be omitted based on performance and structures of the display device 100.

The light receiving unit 163 receives optical signals (including control signals) received from an external control device via an optical window (not shown) of the bezel of the display unit 115. The light receiving unit 163 may receive an optical signal corresponding to a user input (e.g., a touch, a press, a touch gesture, a voice, or a motion) from an external control device. A control signal may be extracted from the received optical signal under the control of the control unit 180.

According to an example, the light receiving unit 163 may receive a control signal corresponding to a user input for selecting at least one application displayed at the display unit 115 from the control device 200.

The input/output unit 170 receives video (e.g., moving pictures), audio (e.g., voices, music, etc.), and additional information from outside of the display device 100 under the control of the control unit 180. The input/output unit 170 may include one of a high-definition multimedia interface (HDMI) port 171, a component jack 172, a PC port 173, and a USB port 174. The input/output unit 170 may include a combination of the HDMI port 171, the component jack 172, the PC port 173, and the USB port 174.

It will be apparent to one of ordinary skill in the art that configurations and operations of the input/output unit 170 may vary based on the various examples.

The control unit 180 may, for example, be in the form of or include a processor or controller configured to control the overall operations of the display device 100, to control signal flows between the internal components 110 through 190 of the display device 100, and to process data. If an input or a condition, which is set and stored in advance, is satisfied, the control unit 180 may be configured to execute an operation system (OS) and various applications stored in the storage unit 190.

The control unit 180 may include a RAM 181, which stores signals or data input from outside of the display device 100 or is used as a storage space corresponding to various tasks performed by the display device 100, a ROM 182, which stores a control program for controlling the display device 100, and a processor 183.

The processor 183 may include a graphic processing unit (GPU) (not shown) for processing video graphics. The processor 183 may be embodied as a system-on-chip (SoC) in which a core (not shown) and a GPU (not shown) are integrated with each other. The processor 183 may include a single core, dual cores, triple cores, quad cores, or cores of multiples thereof.

Furthermore, the processor 183 may include a plurality of processors. For example, the processor 183 may include a main processor (not shown) and a sub processor (not shown) that operates in a sleep mode.

The graphic processing unit 184 generates a screen image including various objects, such as icons, images, and texts, by using a calculating unit (not shown) and a rendering unit (not shown). The calculating unit calculates property values, such as coordinates, shapes, sizes, and colors, for displaying respective objects based on layouts of screen images by using user interactions detected by the detecting unit 160. The rendering unit generates screen images of various layouts including objects based on property values calculated by the calculating unit. A screen image generated by the rendering unit is displayed in a display area of the display unit 115.

First through nth interfaces 185-1 through 185-n are connected to the above-stated components. One of the interfaces may be a network interface connected to an external device via a network.

The RAM 181, the ROM 182, the processor 183, the graphic processing unit 184, and the first through nth interfaces 185-1 through 185-n may be connected to one another via an internal bus 186.

In the present example, the term "control unit" may, for example, include the processor 183, the ROM 182, and/or the RAM 181.

The control unit 180 of the display device 100 according to an example may be configured to provide a multi-window screen image including a plurality of windows to the wireless LAN 151.

Furthermore, the control unit 180 may be configured to receive an input for selecting at least one application displayed at the display unit 115.

Furthermore, the control unit 180 may be configured to display a list including the at least one application at the display unit 115 and to receive an input for selecting at least one application in the list.

Furthermore, the control unit 180 may be configured to categorize the at least one application included in the list based on property information regarding the application and display a result of the categorization.

Furthermore, the control unit 180 may be configured to obtain property information regarding the selected application.

Furthermore, if the obtained property information regarding the application corresponds to broadcasting content, the control unit 180 may be configured to display a screen image regarding execution of the selected application at a window designated to display the broadcasting content from among a plurality of windows displayed at the display unit 115.

Furthermore, if the obtained property information regarding the application corresponds to broadcasting content, the control unit 180 may be configured to receive broadcast signals via the tuner unit 135 and display the broadcast signals at a window designated to display the broadcasting content from among a plurality of windows displayed at the display unit 115.

Furthermore, if the obtained property information regarding the application corresponds to property information other than the broadcasting content, the control unit 180 may be configured to display a screen image regarding execution of the selected application in one of windows other than a particular window designated to display the broadcasting content from among a plurality of windows displayed at the display unit 115.

Furthermore, the control unit 180 may be configured to set a location of a window for displaying a screen image regarding execution of the selected application from among the plurality of windows in correspondence to property information regarding the application in advance.

Furthermore, based on a received input, the control unit 180 may be configured to set a displayed location of a screen image regarding execution of the selected application, which is displayed in at least one among the plurality of windows, to be fixed.

It will be apparent to one of ordinary skill in the art that configurations and operations of the control unit 180 may vary based on the various examples.

The storage unit 190 may store various data, programs, or applications for operating and controlling the display device 100 under the control of the control unit 180. The storage unit 190 may store signals or data that are input/output in correspondence to operations of the video processing unit 110, the display unit 115, the audio processing unit 120, the audio outputting unit 125, the power supply unit 130, the sensing unit 140, the communication unit 150, the detecting unit 160, and the input/output unit 170. The storage unit 190 may store control programs for controlling the display device 100 and the control unit 180, applications that are initially provided by a manufacturer or downloaded from outside, graphical user interfaces (GUI) related to the applications, objects for providing GUIs (e.g., images, texts, icons, buttons, etc.), user information, documents, databases, or related data.

According to an example, the term "storage unit" includes the storage unit 190, the ROM 182 and the RAM 181 of the control unit 180, or a memory card (e.g., a micro SD card, a USB memory, etc.) (not shown) attached to the display device 100. Furthermore, the storage unit 190 may include a non-volatile memory, a volatile memory, a hard disk drive (HDD), or a solid state drive (SSD).

The storage unit 190 may include a broadcast receiving module, a channel control module, a volume control module, a voice recognition module, a motion recognition module, a light receiving module, a display control module, an audio control module, an external input control module, a power control module, a module for controlling power of a wirelessly connected external device, a voice database (DB), or a motion database (DB) (not shown). The modules and databases of the storage unit 190 that are not shown may be embodied in the form of software for performing a broadcast reception control function, a channel control function, a volume control function, a communication control function, a voice recognition function, a motion recognition control function, a light reception control function, a display control function, an audio control function, an external input control function, a power control function, or a function for controlling power of a wirelessly connected external device. The control unit 180 may perform respective functions by using the above-stated software stored in the storage unit 190.

Furthermore, the display device 100 including the display unit 115 may be electrically connected to a separate external device (e.g., a set-top box) (not shown) including a tuner unit. For example, the display device 100 may,, for example, be embodied as an analog TV, a digital TV, a 3D TV, a smart TV, a LED TV, an OLED TV, a plasma TV, a monitor, etc. However, it will be apparent to one of ordinary skill in the art that the disclosure is not limited thereto.

At least one component may be added to the display device 100 shown in FIG. 3 or at least one of the components (e.g., the internal components 110 through 190) of the display device 100 may be omitted, based on performance of the display device 100. Furthermore, it will be apparent to one of ordinary skill in the art that locations of components (e.g., the internal components 110 through 190) may vary according to performances or structures of the display device 100.

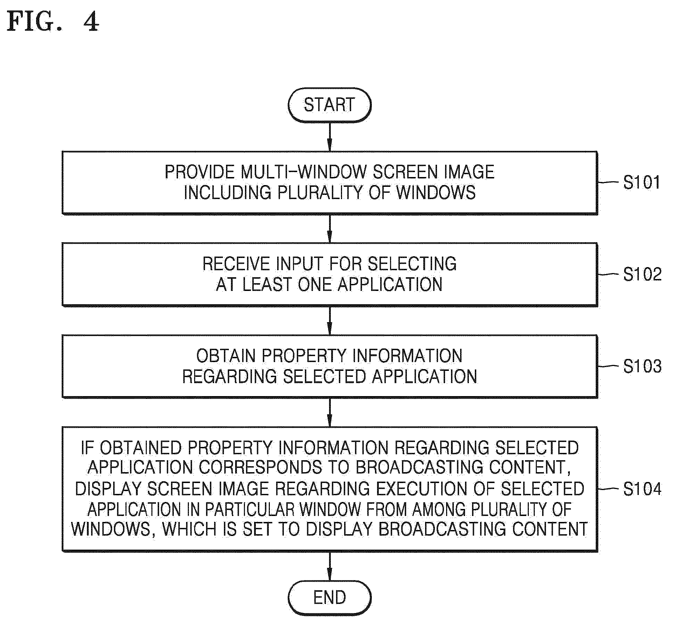

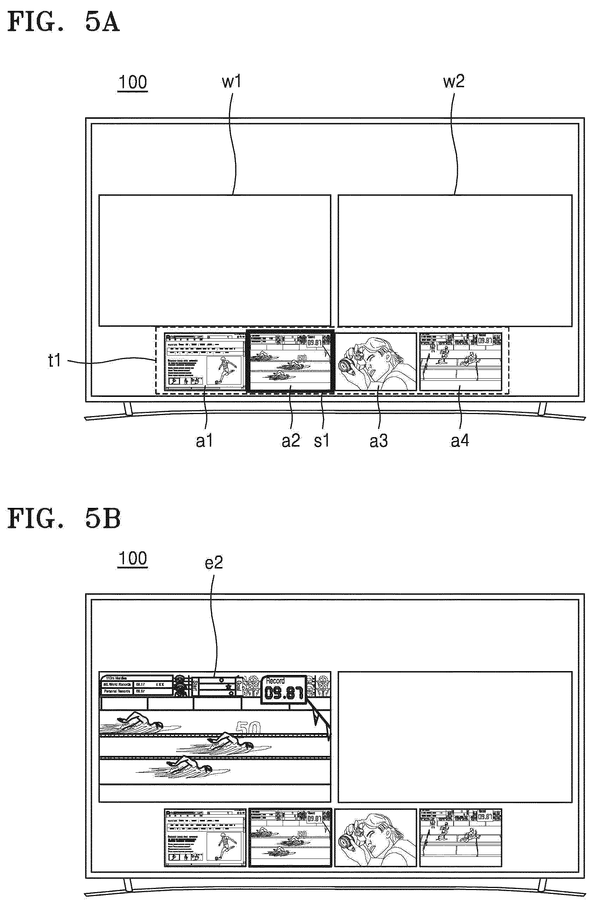

FIG. 4 is a flowchart illustrating an example method of operating a display device. FIGS. 5A and 5B are diagrams illustrating an example of displaying broadcasting content.

In the display device 100 according to an example, as a particular window in a multi-window screen image is set as a location for displaying broadcasting content, a user may watch and modify a screen image regarding execution of another application while continuing to watch the broadcasting content at the same time.

Furthermore, in the display device 100 according to an example, as a particular window is fixed to a location for displaying broadcasting content in a multi-window screen image, better image quality of broadcast content may be maintained as compared to the case of displaying the broadcasting content in arbitrary windows.

Furthermore, the display device 100 according to an example may provide a multi-window screen image arrangement according to a user's preference.

In operation S101 of FIG. 4, the control unit 180 of the display device 100 according to an example may be configured to provide a multi-window screen image including a plurality of windows to the display unit 115.

A multi-window refers to a function for dividing a screen image into a plurality of areas to execute and display a plurality of applications independently.

Referring to FIGS. 5A and 5B, the control unit 180 may be configured to provide a multi-window screen image including a first window w1 and a second window w2 to the display unit 115. Screen images regarding execution of designated applications may be displayed at the respective windows w1 and w2.

In operation S102 of FIG. 4, the control unit 180 of the display device 100 may be configured to receive an input, such as, for example, a user input, for selecting at least one application.

According to an example, the control unit 180 may be configured to receive a control signal corresponding to an input for selecting at least one application displayed at the display unit 115 from the control device 200 via the light receiving unit 163.

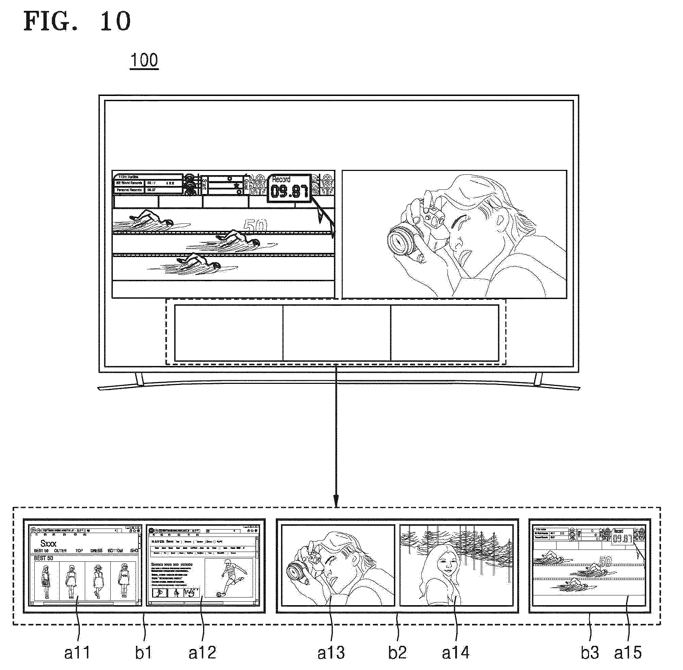

According to an example, the control unit 180 may be configured to display a list including the at least one application at the display unit 115. Here, the control unit 180 may, for example, be configured to categorize the at least one application included in the list based on property information regarding the application and display a result of the categorization. Detailed descriptions thereof will be given below with reference to FIG. 10.

Referring to FIG. 5A, the control unit 180 may be configured to display a list t1 including a plurality of applications a1, a2, a3, and a4 at the display unit 115. Furthermore, the control unit 180 may be configured to receive an input, such as, for example, a user input, for selecting a second application a2 included in the list t1 (s1).

In operation S103 of FIG. 4, the control unit 180 of the display device 100 according to an example may be configured to obtain property information regarding the application selected in operation S102.

According to an example, property information regarding applications may refer to information indicating content to be provided as the respective applications are executed. For example, property information regarding applications may be broadcasting content, games, internet websites, videos-on-demand (VOD), moving pictures, etc. For example, if property information regarding an application is broadcasting content, a screen image regarding execution of the application may be a screen image displaying a real-time broadcasting stream received via the tuner unit 135 at a corresponding window.

In operation S104 of FIG. 4, if the obtained property information regarding the application corresponds to broadcast content, the control unit 180 of the display device 100 according to an example may display a screen image regarding execution of the selected application at a particular window from among a plurality of windows, which is set to display the broadcasting content in advance.

According to an example, the display device 100 may set a particular window to display broadcasting content from among a plurality of windows.

For example, a location of a particular window for displaying broadcasting content from among a plurality of windows may be set at the display device 100 in advance.

Furthermore, the display device 100 may set a location of a particular window for displaying broadcasting content based on an input for designating or changing a particular window. In this case, a location of a particular window for displaying broadcasting content may be determined based on the user's preference.

FIGS. 5A and 5B illustrate an example in which the first window w1 is set as a particular window for displaying broadcasting content. For example, as shown in FIG. 5B, if property information regarding the second application a2 selected in FIG. 5A corresponds to broadcast content, the control unit 180 may be configured to receive a broadcasting screen image e2 related to a swimming competition via the tuner unit 135 and display the broadcasting screen image e2 in the first window w1.

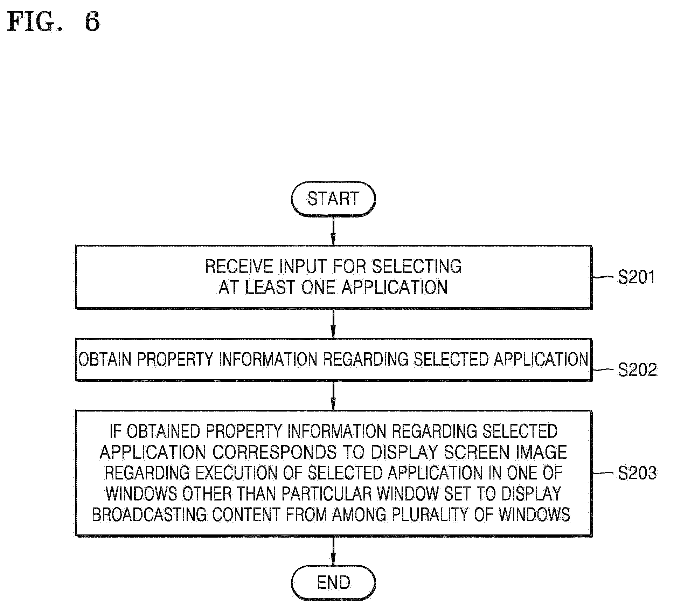

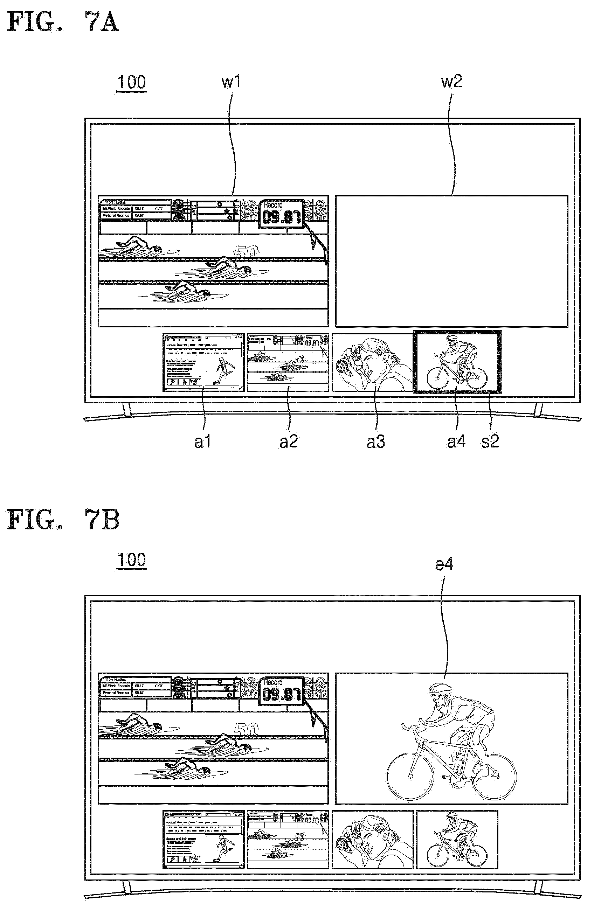

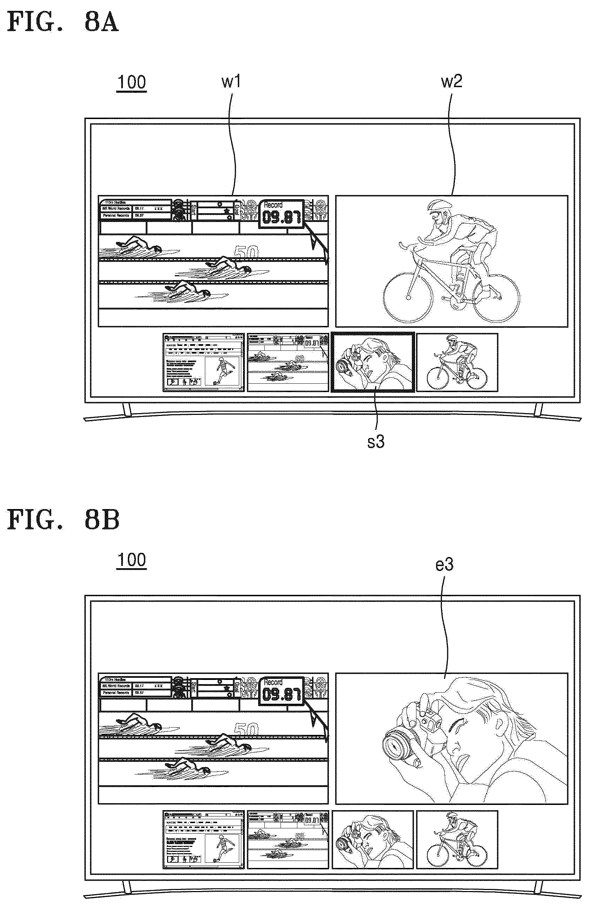

FIG. 6 is a flowchart illustrating an example method of operating a display device. FIGS. 7A, 7B, 8A and 8B are diagrams illustrating an example of displaying content other than broadcasting content.

In operation S201 of FIG. 6, the control unit 180 of the display device 100 according to an example may be configured to receive an input, such as, for example, a user input for selecting at least one application.

For example, as illustrated in FIG. 7A, a fourth application a4 may be selected from a list including the applications a1, a2, a3, and a4 (s2).

In operation S202 of FIG. 6, the control unit 180 of the display device 100 according to an example may be configured to obtain property information regarding the selected application.

For example, property information regarding the fourth application a4 selected in FIG. 7A may be moving pictures.

In operation S203 of FIG. 6, if the property information regarding the application, obtained in operation S202, corresponds to content other than broadcasting content, the control unit 180 of the display device 100 according to an example may be configured to display a screen image regarding execution of the selected application in one of windows other than a particular window designated to display the broadcasting content from among a plurality of windows.

For example, FIGS. 7A and 7 B illustrate an example in which the first window w1 is set to display broadcast content. If property information regarding the fourth application a4 selected in FIG. 7A corresponds to moving pictures, the property information is about an application rather than about broadcasting content, and thus a screen image e4 regarding moving image playback may be displayed in a window (the second window w2) rather than the first window w1.

Furthermore, referring to FIGS. 8A and 8B, an example in which a third application a3 is selected (s3) is shown. Referring to FIG. 8B, if property information regarding the third application a3 is a VOD, the control unit 180 may be configured to display a VOD screen image e3 at the second window w2, which is a window other than the first window w1 that is set to display broadcasting content in advance. Therefore, the control unit 180 is configured to switch a screen image of the second window w2 to the VOD screen image e3, which is a screen image regarding execution of the third application a3.

According to an example, if an input for executing a new application that is not displayed in any of a plurality of windows is received, the control unit 180 is configured to continue to display a screen image regarding broadcasting content at the first window w1 and to switch a screen image of a window other than the first window w1 to a screen image regarding execution of the new application.

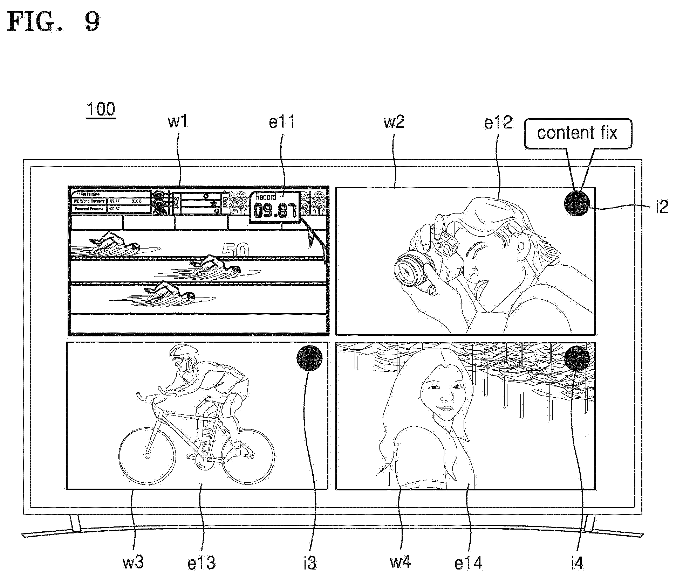

FIG. 9 is a diagram illustrating an example of fixing a location of a window for displaying content.

FIG. 9 illustrates an example in which the first window w1 from among the plurality of applications a1, a2, a3, and a4 is set to display broadcasting content. FIG. 9 also illustrates an example that a screen image e12 regarding execution of a second application, a screen image e13 regarding execution of a third application, and a screen image e14 regarding execution of a fourth application are displayed at the second window w2, a third window w3, and a fourth window w4, respectively.

According to an example, the control unit 180 of the display device 100 may be configured to set the display to maintain displaying locations of screen images regarding execution of the applications that are displayed at the respective windows.

For example, as shown in FIG. 9, the control unit 180 may be configured to display designated icons i2, i3, and i4 at the windows w2, w3, and w4, respectively. When an input for selecting the second icon i2 displayed at the second window w2 is received, the control unit 180 may be configured to fix the second window w2 as a location for displaying the moving picture screen image e12 that is being displayed in the second window w2. Therefore, when an input for executing a new application is received, the control unit 180 is configured to display a screen image regarding execution of the new application at a window other than the second window w2.

According to an example, a particular window from among a plurality of windows is fixed to display a screen image regarding execution of a particular application selected, screen images regarding execution of applications may be arranged based on the user's preference.

According to another example, the control unit 180 may be configured to set a location of a window for displaying a screen image regarding execution of a selected application from among a plurality of windows provided at the display unit 115 corresponding to property information regarding the selected application in advance.

For example, locations of respective windows for displaying screen images regarding execution of applications may be set in advance based on property information regarding the respective applications. For example, the fourth window w4 of FIG. 9 may be set in advance to display a screen image regarding execution of an application with property information corresponding to moving pictures.

According to various examples, property information regarding applications corresponding to respective windows may be set to the display device 100 in advance or may be set or changed based on signals input by a user.

FIG. 10 is a diagram illustrating an example of displaying a list of applications.

According to an example, the display device 100 may display a list including at least one of applications a11, a12, a13, a14, and a15 on the display unit 115. Furthermore, the control unit 180 may be configured to categorize the at least one of applications a11, a12, a13, a14, and a15 included in the list based on property information regarding the application(s) and display a result of the categorization.

For example, as shown in FIG. 10, the control unit 180 may be configured to categorize property information regarding applications into internet websites b1, moving pictures b2, and broadcasting content b3. The control unit 180 may be configured to categorize applications based on the application property information b1, b2, and b3 and display a result of the categorization.

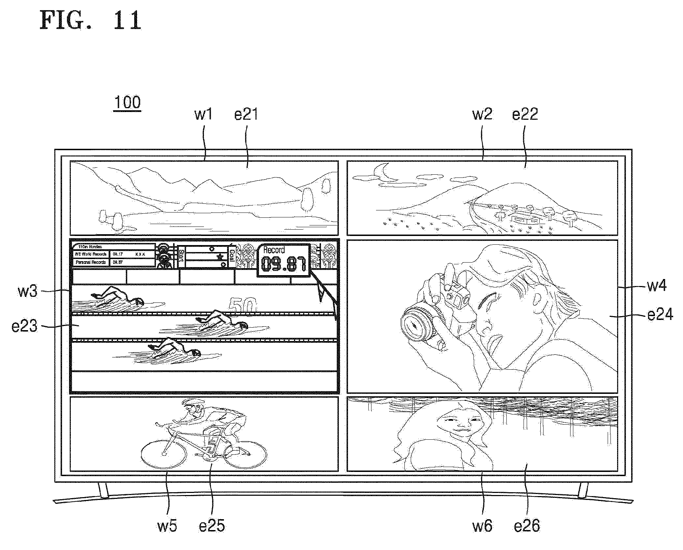

FIG. 11 is a diagram illustrating an example of multi-window screen images.

According to an example, the display device 100 may provide a multi-window screen image including a plurality of windows. For example, as shown in FIG. 11, the control unit 180 may be configured to divide the display unit 115 into 6 areas and provide a multi-window screen image including 6 windows w1, w2, w3, w4, w5, and w6. However, it is merely an example, and the disclosure is not limited thereto. According to an example, a multi-window screen image including less than or more than 6 windows may be provided.

Screen images e21, e22, e23, e24, e25, and e26 regarding execution of applications may be displayed at the windows w1, w2, w3, w4, w5, and w6, respectively.

According to an example, the control unit 180 may be configured to set the third window w3 from among the plurality of windows w1, w2, w3, w4, w5, and w6 as a particular window for displaying broadcasting content. Therefore, a screen image e23 regarding broadcasting content may continue to be displayed at the third window w3.

The above examples are merely exemplary and should not be considered as having the purpose of limiting the disclosure. Furthermore, the disclosure is not limited to the sequences of the operations in the flowcharts illustrated in FIGS. 4 and 6. Rather, it should be considered that some operations may be added or omitted or the sequences may be partially modified according to various examples of the disclosure.

One or more examples may be implemented by a non-transitory computer-readable recording medium, such as a program module executed by a computer. The non-transitory computer-readable recording medium may be an arbitrary available medium accessible by a computer, and examples thereof include all volatile media and non-volatile media and separable and non-separable media. Furthermore, examples of the non-transitory computer-readable recording medium may include a computer storage medium and a communication medium. Examples of the non-transitory computer storage medium include all volatile and non-volatile media and separable and non-separable media, which have been implemented by an arbitrary method or technology, for storing information such as computer-readable commands, data structures, program modules, and other data. The communication medium typically includes a computer-readable command, a data structure, a program module, other data of a modulated data signal, or another transmission mechanism, and an example thereof includes an arbitrary information transmission medium.

Furthermore, in the disclosure, the term "unit" may refer to a hardware component, such as a processor or a circuit, and/or a software component that is executed by a hardware component like a processor or any combination thereof.

While the disclosure has been illustrated and described with reference to examples thereof, it will be understood by those of ordinary skill in the art that various changes in form and details may be made therein without departing from the scope of the disclosure as defined by the following claims. Hence, it will be understood that the examples described above do not limit the scope of the disclosure. For example, each component described as a single type may be executed in a distributed manner, and components described as being distributed may also be executed in an integrated form.

The scope of the disclosure is indicated by the claims which will be described in the following, and it should be understood that the claims and all modifications or modified forms drawn from the claims are included in the scope of the disclosure.

## Claims

1. A display device comprising:
a display configured to provide a multi-window screen image including a plurality of windows; and
a controller configured to obtain property information regarding the selected application if an input for selecting at least one application is received, and to display a screen image regarding execution of the selected application in a particular window from among the plurality of windows, which is set to display the broadcasting content in advance if the obtained property information regarding the selected application corresponds to broadcasting content.

2. The display device of claim 1, further comprising tuner circuitry configured to receive broadcast signals,
wherein the controller is configured to receive the broadcast signals via the tuner circuitry and to output the broadcast signals in a particular window from among the plurality of windows, which is set to display the broadcasting content in advance if the obtained property information regarding the selected application corresponds to the broadcasting content.

3. The display device of claim 1 or 2, wherein the controller is configured to display a screen image regarding execution of the selected application in one window other than the particular window from among the plurality of windows, which is set to display the broadcasting content in advance if the obtained property information regarding the selected application corresponds to property information other than the property information corresponding to the broadcasting content.

4. The display device of any one of claims 1 to 3, wherein the controller is configured to set a location of a window for displaying the screen image regarding execution of the selected application from among the plurality of windows in correspondence to property information regarding the selected application in advance.

5. The display device of any one of claims 1 to 4, wherein the controller is configured to display a list including the at least one application and to receive an input for selecting at least one application from the list.

6. The display device of claim 5, wherein the controller is configured to categorize the at least one application included in the list based on property information regarding the application and to display a result of the categorization.

7. The display device of any one of claims 1 to 6, wherein the controller is configured to set a displaying location of a screen image regarding execution of at least one application displayed in at least one of the plurality of windows based on a received input.

8. A method of displaying content comprising:
providing a multi-window screen image including a plurality of windows;
receiving an input for selecting at least one application;
obtaining property information regarding the selected application; and,
displaying a screen image regarding execution of the selected application in a particular window from among the plurality of windows, which is set to display the broadcasting content in advance if the obtained property information regarding the selected application corresponds to broadcasting content.

9. The method of claim 8, wherein the displaying includes outputting broadcast content corresponding to broadcast signals received via tuner circuitry at a particular window from among the plurality of windows which is set to display the broadcasting content in advance if the obtained property information regarding the selected application corresponds to broadcasting content.

10. The method of claim 8 or 9, wherein the displaying includes displaying a screen image regarding execution of the selected application in one of windows other than the particular window from among the plurality of windows which is set to display broadcasting content in advance if the obtained property information regarding the selected application corresponds to property information other than the property information corresponding to the broadcasting content.

11. The method of any one of claims 8 to 10, further comprising setting a location of a window for displaying the screen image regarding execution of the selected application from among the plurality of windows in correspondence to property information regarding the selected application in advance.

12. The method of any one of claims 8 to 11, wherein, receiving the input comprises:
displaying a list including the at least one application; and
receiving an input for selecting at least one application from the list.

13. The method of claim 12, wherein, in the displaying of the list, the at least one application included in the list is categorized based on property information regarding the application and a result of the categorization is displayed.

14. The display method of any one of claims 8 to 13, further comprising setting a displaying location of a screen image regarding execution of at least one application displayed in at least one of the plurality of windows based on a received input.
